# EUROPÄISCHE PATENTSCHRIFT

(11) **EP 1 924 804 B1**
(45) Veröffentlichungstag und Bekanntmachung des Hinweises auf die Patenterteilung: **10.04.2013**
(21) Anmeldenummer: 06805282.8
(22) Anmeldetag: 13.09.2006
(51) Int. Cl.: F17C 13/08, B64G 1/40

(54) **TREIBSTOFFTANK FÜR KRYOGENE FLÜSSIGKEITEN**
PROPELLANT FOR CRYOGENIC LIQUIDS
RESERVOIR A CARBURANT DESTINE A DES LIQUIDES CRYOGENIQUES

(30) Priorität: 17.09.2005 DE 102005044534
(43) Veröffentlichungstag der Anmeldung: 28.05.2008
(73) Patentinhaber: Astrium GmbH, 85521 Ottobrunn (DE)
(72) Erfinder: BEHRUZI, Kei, Philipp, 28209 Bremen (DE); MICHAELIS, Mark, 28203 Bremen (DE); NETTER, Gaston, 27729 Vollersode (DE); RITTWEGER, Andreas, 28232 Achim (DE)
(74) Vertreter: Hansmann, Dierk
(86) Internationale Anmeldenummer: PCT/DE2006/001605
(87) Internationale Veröffentlichungsnummer: WO 2007/031064

(56) Entgegenhaltungen:
- EP-A2- 0 042 784
- EP-A2- 0 476 720
- DE-A1- 10 040 755
- DE-A1- 10 117 557
- FR-A- 2 182 503
- GB-A- 2 109 760
- US-A- 4 733 531

## Beschreibung

Die Erfindung betrifft einenRaumflugkörper mit einem Treibstofftank zur Lagerung kryogener Flüssigkeiten für den Betrieb und einem als Fördermedium dienenden Treibgas, wobei wenigstens eine Entnahmevorrichtung in Form eine wiederbefüllbaren Reservoirs und einer Separation des Treibstoffs vom Treibgas durch Oberflächenspannung sowie sich einstellende hydraulische Kräfte auftritt.

Bei Raumflugkörpern dienen häufig Treibgase zur Förderung des Treibstoffs aus den Treibstofftanks in die Brenn- bzw. Reaktionskammer. Bei kryogenen Flüssigkeiten wird als Treibgas üblicherweise Helium (He) eingesetzt, das den Treibstoffbehälter beaufschlagt und das dadurch den Treibstoff in das zum jeweiligen Triebwerk führende Rohrleitungssystem preßt. Wichtig bei einem solchen Tank, wie er beispielsweise aus der DE 101 17 557 A1 bekannt ist, dabei eine vollständige und sichere Trennung zwischen dem als Fördermedium dienenden Treibgas und dem in das Triebwerk gelangenden Treibstoff, da letzterer bei seiner Zündung unbedingt frei von Fremdgaseinlagerungen sein muß.

Aufgrund ihrer höheren Effektivität bei zugleich geringerem Gewicht werden kryogene Treibstoffe den herkömmlichen flüssigen Treibstoffen, wie zum Beispiel MMH, nach Möglichkeit vorgezogen. Nachteilig wirkt sich bei kryogenen Treibstoffen jedoch aus, daß sie im Gegensatz zu herkömmlichen Treibstoffen bei Raumtemperaturen nicht lagerfähig sind. Flüssiger Wasserstoff, auch als LH2 bezeichnet, geht beispielsweise bei einer Temperatur von etwa 30 K in den gasförmigen Zustand über, so daß eine ausreichende Isolierung des Treibstofftanks unerläßlich ist, um die Lagerfähigkeit über einen ausreichenden Zeitraum zu gewährleisten. Ähnliches gilt für flüssigen Sauerstoff (LOX), der zusammen mit dem LH2 eingesetzt und in separaten Tanks gelagert wird. Eine Isolierung des Treibstofftanks ei längerer Lagerung wird aufgrund der Wärmeeinträge, unter anderem durch Sonneneinstrahlung und heiße Komponenten, wie Triebwerke, notwendig.

Im Gegensatz zu einer Verwendung von nicht kryogenen, lagerfähigen Treibstoffen kann bei kryogenen Treibstoffen die im Allgemeinen wärmere Tankwand zum Sieden der Flüssigkeit in der Nähe der Tankwand führen, wodurch eine blasenfreie Treibstoffförderung erschwert wird. Insbesondere die thermische Isolierung des die Entnahmevorrichtung bildenden Reservoirs zur Vermeidung von Gasbildung innerhalb des Reservoirs und die Gestaltung von im Reservoir angeordneten Leitblechen stellt daher besondere Anforderungen an einen derartigen Tank. Diese Leitbleche werden dabei innerhalb des Reservoirs so angeordnet, daß die Flüssigkeit im Reservoir stabil positioniert wird und daß Gasblasen aus dem Reservoir zurück in den Tank ausgetrieben werden. Diese Haltewirkung wird durch die lokale Veränderung des Kapillardrucks unterstützt.

Ein zusätzliches Problem stellt die blasenfreie Treibstoffförderung unter dem Zustand der Schwerelosigkeit dar. Eine blasenfreie Treibstoffförderung läßt sich zum Beispiel durch eine Vorbeschleunigung mittels von mitgeführten Zusatzraketen erreichen. Diese Vorbeschleunigung führt dann zu einer Reorientierung und Positionierung der Flüssigkeit in der Nähe des Auslaßrohres. Der Vorgang der Zündung beinhaltet hierbei zunächst, daß eine Abkühlungsphase des Leitungssystems auf Betriebstemperatur, gefolgt von der eigentlichen Zündungsphase der Triebwerke erfolgt. In der Abkühlungsphase wird weitestgehend kalter, flüssiger Treibstoff aus dem Treibstofftank in das Leitungssystem gefördert. Auch für diese Abkühlungsphase kann die Erfindung unbegrenzt Treibstoff liefern. Eine Zündung des Treibwerks erfolgt erst, wenn nach der Abkühlung auf Betriebstemperatur das gesamte System blasenfrei ist.

Nach der FR 2 865 018 A1 ist eine Anordnung mit einer Absauganordnung bekannt, die unter stationären Bedingungen Flüssigkeiten bereitstellt und für die Funktionsfähigkeit auf das Schwerefeld der Erde angewiesen ist. Diese Anordnung ist nicht auf eine Treibstoffförderung für einen Weltraumbetrieb bei Schwerelosigkeit übertragbar und zur Treibstoffförderung unter Ausnutzung hydraulischer Kräfte sowie Kapillarkräfte einsetzbar.

Aufgabe der Erfindung ist es, einen Raumflugkörper mit einem Treibstofftank der eingangs genannten Art so auszubilden, daß er bei der Verwendung kryogener Treibstoffe alternativ zu einer Vorbeschleunigung eine blasenfreie Treibstoffförderung durch die Ausnutzung hydrostatischer Kräfte sowie von Kapillarkräften gewährleistet.

Die Erfindung löst diese Aufgabe dadurch, daß als Tankwand des Treibstofftanks zwei Halbschalen angeordnet sind, die miteinander verbunden und einen toroidförmigen Aufnahmebehälter bilden und die Entnahmevorrichtung als Reservoir im unteren Bereich auf der Außenseite der Tankwand als Halbschale angeordnet ist sowie in der Halbschale Bohrungen als Verbindung zum Reservoir vorgesehen sind.

Die Ausgestaltung der bei dem Treibstofftank nach der Erfindung vorgesehenen Entnahmevorrichtung weist dabei den Vorteil auf, daß sie auch bei sehr hohen Rotationsraten um die Tanklängsachse der mit einem solchen Tank ausgestatteten Raketenstufe Treibstoff zu fördern vermag. So ist eine sichere Treibstoffförderung auch bei nicht nominalem Verhalten der Stufe sichergestellt. Die erfindungsgemäße Entnahmevorrichtung kann, bereits vollständig zusammengebaut, in einem separaten Teststand geprüft werden. Zudem werden keine weiteren Bauteile innerhalb des Treibstofftanks benötigt, vielmehr wird die Entnahmevorrichtung als separates Bauteil außen an der die Tankwand bildenden äußeren Schale angebracht. Diese Tankschalen bestehen bei großen Tanks, wie dem ESC-A LH2 Tank der Ariane 5, üblicherweise aus einzelnen Segmenten, so daß das Reservoir in eines der Segmente eingepaßt werden kann, bevor die Tankschalen zusammengebaut werden.

Der Verzicht auf eine Vorbeschleunigung und damit auf die Mitnahme von separaten Zusatzraketen ermöglicht eine zusätzliche Gewichtsersparnis und folglich eine höhere Nutzlast bei mehrfacher Wiederzündung. Das Reservoir gewährleistet eine stabile Positionierung des Treibstoffs am Auslaß und beschränkt nicht die Anzahl an Widerzündungen, auch nicht bei sehr geringen Restfüllgraden im Tank. Die Anzahl möglicher Wiederzündungen ist somit lediglich von der jeweils benötigten Treibstoffmenge abhängig. Der Tank nach der Erfindung eignet sich dabei in gleicher Weise sowohl für die Aufbewahrung kryogenen Treibstoffs, wie LH2, als auch für die Aufbewahrung von flüssigem Sauerstoff in Form von LOX.

In den bevorzugten Ausführungsformen gemäß den Unteransprüchen 2 bis 4 der Erfindung ist die Entnahmevorrichtung mit einer Isolierung sowie einer Wärmefalle versehen und eignet sich dadurch insbesondere für solche toroidförmigen Tanks sowie Tanks mit einem Zwischenboden, wie sie in ähnlicher Form beispielsweise als LH2-Tanks in der kryogenen Oberstufe ESC-A oder der geplanten ESC-B der Ariane 5 zum Einsatz kommen bzw. künftig zum Einsatz kommen werden.

Weitere Ausgestaltungen der Erfindung sind durch die Unteransprüche 5 bis 10 gekennzeichnet.

Nachfolgend soll der erfindungsgemäße Raumflugkörper mit einem Treibstofftank anhand eines in der Zeichnung dargestellten Ausführungsbeispiels näher erläutert werden. Es zeigen:
- Fig. 1: einen Ausschnitt aus einem LH2-Treibstofftank mit einer Entnahmevorrichtung,
- Fig. 2: eine Entnahmevorrichtung gemäß Fig. 1, von oben betrachtet und im Bereich des Siebadapters geschnitten,
- Fig. 3: einen Ausschnitt aus einer Entnahmevorrichtung gemäß den Figuren 1 und 2 in dreidimensionaler Darstellung und
- Fig. 4: einen Ausschnitt des Auslaßrohres innerhalb der Entnahmevorrichtung gemäß den Figuren 1 bis 3, das als sogenannte Heat Pipe ausgebildet ist.

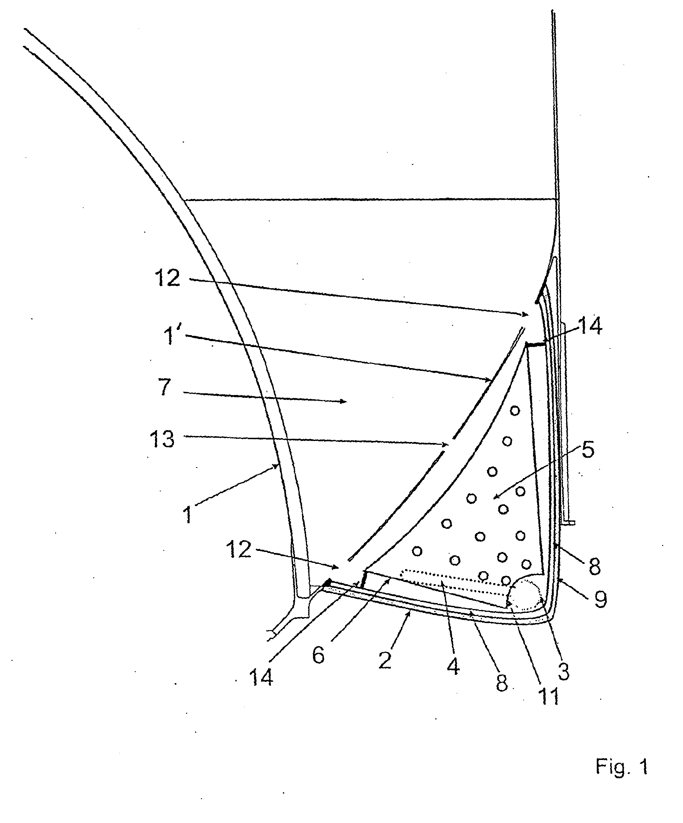

Bei dem in Fig. 1 in einem Teilschnitt dargestellten Treibstofftank handelt es sich um einen Tank für die Aufnahme und Lagerung kryogenen Treibstoffs als Teilelement eines Toroid-Tanks, wie er in ähnlicher Form beispielsweise den unteren Teil des LH2-Tanks in der derzeitigen Oberstufe ESC-A der Ariane 5 Rakete bildet. Allgemein zeichnen sich Toroid-Tanks dadurch aus, daß vier Treibstofftanks, je zwei für LH2 und zwei für LOX, zusammen die Form eines Toroids bilden. Bei einer solchen Tankausführung würde das hier dargestellte Ausführungsbeispiel für jeden Treibstofftank ein getrennter Auslaß verwendet werden.

Der in Fig. 1 dargestellte Treibstofftank besteht aus zwei Halbschalen 1 und 1', die miteinander verbunden sind und die einen toroidförmigen Aufnahmebehälter 7 bilden. Im Verbindungsbereich der beiden Halbschalen 1 und 1' bildet die Tankwand dadurch eine sehr starke Krümmung aus, so daß sich im schwerelosen Zustand Flüssigkeiten bevorzugt in diesem Bereich ansammeln. Zudem ist in diesem Bereich die kapillare Druckdifferenz besonders hoch, so daß eine Pumpwirkung in Richtung dieser Ecke eintritt. Dieser Bereich des Treibstofftanks eignet sich daher besonders gut, um, wie in Fig. 1 gezeigt, hier eine Entnahmevorrichtung in Form eines wiederbefüllbaren Reservoirs 2 anzuordnen.

Um eine einwandfreie Förderung auch während Flugphasen mit hohen Rotationsraten zu gewährleisten, ist das Reservoir 2 derart von außen an der Tankwand 1' angebracht, daß sich die Flüssigkeit auch bei einer reinen Spin-Belastung bevorzugt in diesem Reservoir 2 ansammelt. Das Reservoir 2 ist doppelwandig ausgeführt, um, wie nachfolgend noch näher erläutert wird, den Wärmeeintrag in dieses Reservoir 2 zu minimieren.

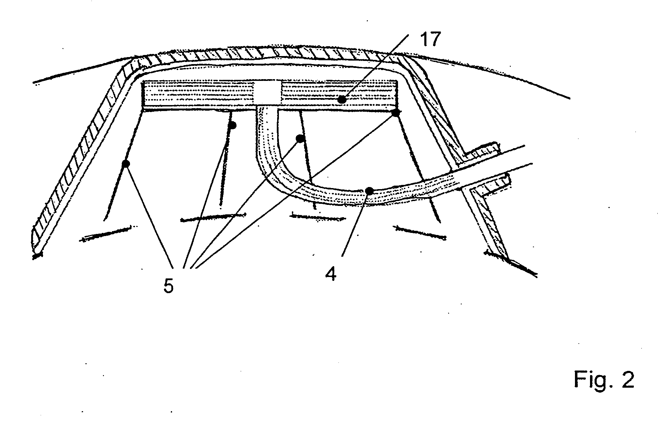

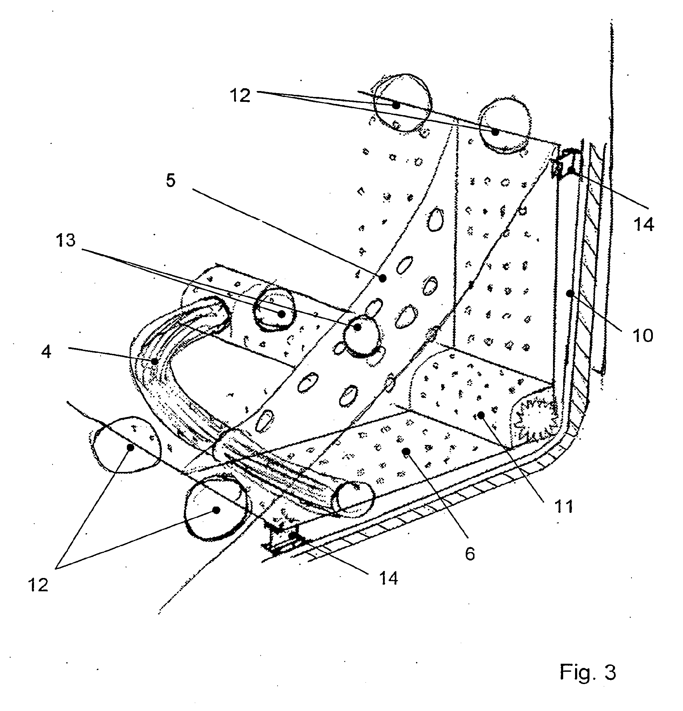

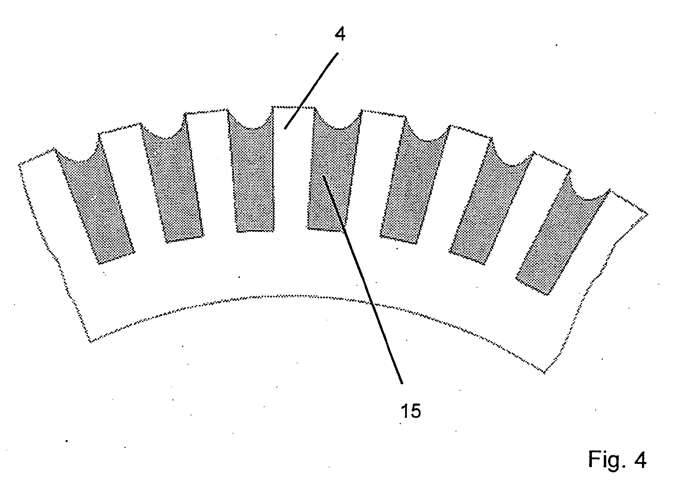

Der Treibstoff wird aus dem Reservoir 2 über ein mit Falten versehenes, d.h. "plissiertes" Sieb 3 abgesaugt. Das Sieb hat sowohl die Funktion eines Schmutzsiebes als auch die einer Blasenfalle, die das Eindringen von Gas in das Reservoir 2 aus einer während langer ballistischer Phasen mit Dampf gefüllten Treibstoffleitung 4 weitestgehend unterbindet. Die Treibstoffleitung 4 wird, auch als Auslaßrohr bezeichnet, die sich gemäß Fig. 3 außerhalb des Reservoirs 2 befindet, in dieses mündet und am Siebadapter 3 endet. Von der Treibstoffleitung 4 in das Reservoir 2 wird eindringendes Gas über die in im Reservoir 2 vorgesehenen Bleche 5 und 6 in den Aufnahmebehälter 7 des Treibstofftanks abgeführt. Damit wird eine Benetzung des Siebes 3 während ballistischer Phasen gewährleistet. Um eine ausreichend hohe Durchflußrate durch das Sieb 3 zu gewährleisten, muß die Siebfläche möglichst groß sein. Aus diesem Grund sind, wie in Fig. 2 erkennbar, zwei zylinderförmige Siebelemente 17 mit sternförmigem Querschnitt, auch als plissiert bezeichnet, rechts und links vom Auslaßrohr 4 innerhalb des Reservoirs 2 angebracht. Das Auslaßrohr 4 ist in seinem innerhalb des Reservoirs 2 verlaufenden Teilbereich als sogenannte Heat Pipe ausgebildet und besitzt eine mit Längsnuten versehene äußere Oberfläche. Dadurch wird eindringende Wärme aus dem Rohr 4 besser an die Flüssigkeit abgegeben. Die an der Rohrwand verdampfende Flüssigkeit, in Fig. 4 mit dem Bezugszeichen 15 gekennzeichnet, wird durch aufgrund der wirkenden Kapillarkräfte nachströmenden Flüssigkeit ersetzt, so daß die Oberfläche in diesem Bereich wieder benetzt und ein Austrocknen der Rohroberfläche vermieden wird; zugleich wird durch diesen Prozeß die Wärme aus dem Rohr 4 abgeführt. Der Wärmeeintrag entlang des Rohres 4 in Richtung des Siebadapters 3 wird dadurch reduziert. Des weiteren muß in der vor der eigentlichen Widerzündung durchgeführten Abkühlphase das Rohr weniger stark heruntergekühlt werden.

Zur Minimierung der eindringenden Restwärme ist das Reservoir 2, wie in Fig. 1 erkennbar, doppelwandig und vakuumisoliert ausgeführt. Wegen des höheren Tankinnendrucks von etwa 3 bar ist aus strukturellen Gründen das Reservoir 2 als Schalenelement ausgebildet. Vor dem Start kann zum Zweck einer besseren thermischen Isolierung am Boden eine Vakuumpumpe angeschlossen werden, die während dieser Phase am Boden betrieben und kurz vor Start gekappt werden kann. Innerhalb der doppelwandig ausgebildeten Wand 8 des Reservoirs 2 ist darüber hinaus eine zusätzliche mehrlagige Isolierung in Form einer sogenannten Multi-Layer-Insulation (MLI) vorgesehen, die gegen Strahlungswärme isoliert. Ferner ist das Reservoir 2 von außen zusätzlich durch Isolierschaum 9 thermisch isoliert.

Innerhalb des Reservoirs 2 ist, wie in Fig. 3 erkennbar, in einem Abstand von etwa sechs bis acht Millimetern von der Reservoirwand ein L-förmiges Blech 6 angebracht. Bohrungen in diesem Blech 6 ermöglichen dabei seine Durchströmung. Senkrechte Querrippen 5 versteifen das L-förmige Blech 6 und fördern zusätzlich die Austreibung von Gas aus dem Reservoir 2. Die Querrippen 5 sind gemäß Fig. 2 zum Tank hin leicht konisch zueinander angebracht. Die dadurch erzielte Kapillarwirkung unterstützt zusätzlich die Austreibung von Gas bzw. Dampf aus dem Reservoir 2. Im Winkel des L-förmigen Bleches 6 befindet sich das plissierte Sieb 3, das durch zwei senkrechte Endbleche und durch das Auslaßrohr 4 mit dem L-förmigen Blech 6 verbunden ist.

Das Blech 6 ist über Abstandshalter 14 mit der inneren Reservoirwand 10 verbunden. Diese Abstandshalter 14 befinden sich in maximal möglicher Entfernung vom plissierten Sieb 3, um so das Sieb 3 thermisch besser von der warmen Tankwand 1, 1' zu entkoppeln. Ferner sind die Abstandshalter 14 so gefertigt, daß sie eine optimale Isolierung zwischen der Reservoirwand 8 und dem L-förmigen Blech 6 gewährleisten.

Das Sieb 3 wird zum einen durch die Reservoirwand 8 und zum anderen durch ein gelochtes Blech 11 in einer Form ähnlich der eines Zylinderausschnittes begrenzt. Dies fördert aufgrund seiner Kapillarwirkung die Wiederbenetzung des Siebes 3. Entstehende Gasblasen werden durch den Spalt zwischen der inneren Reservoirwand 10 und dem L-förmigen Blech 6 aus dem Reservoir 2 zurück in den Aufnahmebehälter 7 des Treibstofftanks getrieben.

Bevorzugt kreisförmige bzw. ovale Öffnungen 12, 13 in der Tankwand 1' hin zum Reservoir 2 erlauben einen Austausch sowohl von Flüssigkeit als auch von Gas zwischen diesen beiden Bereichen. Das Gas bzw. der Dampf kann durch diese Öffnungen zurück in den Aufnahmebehälter 7 des Treibstofftanks gelangen, und Flüssigkeit aus dem Aufnahmebehälter 7 des Treibstofftanks kann das Gasvolumen ergänzen. Dabei sind mehrere größere Öffnungen 12, wie sie vom Durchmesser in etwa dem Durchmesser des Auslaßrohres 4 entsprechend, im unteren und oberen Bereich des Reservoirs 2 und mehrere kleinere Öffnungen 13 im mittleren Teil des Reservoirs 2 vorgesehen.

## Patentansprüche

1. Raumflugkörper mit einem Treibstofftank zur Lagerung kryogener Flüssigkeiten für den Betrieb des Raumflugkörpers und einem als Fördermedium dienenden Treibgas, mit wenigstens einer Entnahmevorrichtung in Form eines wiederbefüllbaren Reservoirs (2) und mit einer Separation des Treibstoffs vom Treibgas durch Oberflächenspannung sowie sich einstellende hydraulische Kräfte, **dadurch gekennzeichnet, daß** als Tankwand des Treibstofftanks zwei Halbschalen (1, 1') angeordnet sind, die miteinander verbunden sind und einen, toroidförmigen Aufnahmebehälter (7) bilden und daß die Entnahmevorrichtung als Reservoir (2) im unteren Bereich auf der Außenseite der Tankwand als Halbschale (1') angeordnet ist und daß in der Halbschale (1') Bohrungen (12, 13) als Verbindung zum Reservoir (2) vorgesehen sind.

2. Raumflugkörper nach Anspruch 1, **dadurch gekennzeichnet, daß** das Reservoir (2) doppelwandig und vakuumisoliert ausgeführt ist.

3. Raumflugkörper nach Anspruch 2, **dadurch gekennzeichnet, daß** das Reservoir (2) im Vakuumbereich zusätzlich durch eine mehrlagige Isolationsfolie abgeschirmt ist.

4. Raumflugkörper nach einem der Ansprüche 1 bis 3, **dadurch gekennzeichnet, daß** das Reservoir (2) durch Isolierschaum (9) nach außen abgeschirmt ist.

5. Raumflugkörper nach einem der Ansprüche 1 bis 4, **dadurch gekennzeichnet, daß** im Reservoir (2) ein konisches, angenähert L-förmiges Blech (6) vorgesehen ist, in dessen Winkel ein ausgeschnittenes Blech (11) in der Art eines Zylinderausschnittes angeordnet ist.

6. Raumflugkörper nach Anspruch 5, **dadurch gekennzeichnet, daß** die Bleche (6, 11) mit Löchern versehen sind.

7. Raumflugkörper nach Anspruch 5 oder 6, **dadurch gekennzeichnet, daß** ein zylinderförmiges und plissiertes Sieb (3) mittels Endplatten rechts und links sowie zusätzlich im Bereich eines Auslaßrohres (4) am L-förmigen Blech (6) befestigt ist.

8. Raumflugkörper nach Anspruch 5, **dadurch gekennzeichnet, daß** mehrere Bleche (5) konisch am L-förmigen Blech (6) angebracht sind, wobei diese keinen Kontakt zur Tankwand (1) aufweisen.

9. Raumflugkörper nach Anspruch 6, **dadurch gekennzeichnet, daß** Haltestützpunkte (14) zur Fixierung der Bleche (6, 11) in maximaler Entfernung von dem als Entnahmestelle fungierenden Sieb (3) vorgesehen sind.

10. Raumflugkörper nach Anspruch 1, **dadurch gekennzeichnet, daß** das Auslaßrohr (4) in seinem im Inneren des Reservoirs (2) verlaufenden Bereich als Heat Pipe ausgebildet und an seiner äußeren Oberfläche mit Längsrillen versehen ist.

## Claims

1. Spacecraft having a propellant tank for storing cryogenic liquids for operation of the spacecraft, and a driving gas serving as a conveying medium, having at least one extraction device in the form of a refillable reservoir (2) and having separation of the propellant from the driving gas by surface tension as well as by hydrostatic forces that arise, **characterised in that** two half-shells (1, 1') are arranged as the tank wall of the propellant tank, which half-shells (1, 1') are connected together and form a toroidal receiving container (7), and **in that** the extraction device in the form of the reservoir (2) is arranged in the lower region on the outside of the tank wall in the form of the half-shell (1'), and **in that** bores (12, 13) are provided in the half-shell (1') as a connection to the reservoir (2).

2. Spacecraft according to claim 1, **characterised in that** the reservoir (2) is double-walled and vacuum-insulated.

3. Spacecraft according to claim 2, **characterised in that** in the vacuum region the reservoir (2) is additionally shielded by a multilayer insulating film.

4. Spacecraft according to any one of claims 1 to 3, **characterised in that** the reservoir (2) is shielded to the outside by insulating foam (9).

5. Spacecraft according to any one of claims 1 to 4, **characterised in that** there is provided in the reservoir (2) a conical, approximately L-shaped metal plate (6), in the angle of which there is arranged a cut-out metal plate (11) in the manner of a cylinder cut-out.

6. Spacecraft according to claim 5, **characterised in that** the metal plates (6, 11) are provided with holes.

7. Spacecraft according to claim 5 or 6, **characterised in that** a cylindrical and pleated sieve (3) is fastened to the L-shaped metal plate (6) by means of end plates on the right and left and additionally in the region of an outlet pipe (4).

8. Spacecraft according to claim 5, **characterised in that** a plurality of metal plates (5) are attached conically to the L-shaped metal plate (6), which metal plates (5) have no contact with the tank wall (1).

9. Spacecraft according to claim 6, **characterised in that** holding support points (14) for fixing the metal plates (6, 11) are provided at the maximum distance from the sieve (3) serving as the extraction point.

10. Spacecraft according to claim 1, **characterised in that** the outlet pipe (4) in its region extending inside the reservoir (2) is in the form of a heat pipe and is provided on its outer surface with longitudinal grooves.

## Revendications

1. Engin spatial avec un réservoir à carburant pour le stockage de liquides cryogéniques, destinés à assurer le fonctionnement, et d'un gaz de chasse servant d'agent propulseur, avec au moins un dispositif de prélèvement, réalisé sous la forme d'un réservoir réemplissable (2) et avec un système séparant le carburant du gaz de chasse par tension de surface ainsi que par des forces hydrauliques se produisant, **caractérisé en ce que**, comme parois du réservoir de carburant, sont prévues deux demi-coques (1, 1'), qui sont reliées ensemble et forment un récipient toroïdal (7), et que le dispositif de prélèvement est disposé, en tant que réservoir (2), dans la région inférieure, sur le côté extérieur de la paroi du réservoir, en l'occurrence de la demi-coque (1'), et que des alésages (12, 13) sont prévues dans la demi-coque (1'), pour le raccordement au réservoir (2).

2. Engin spatial selon la revendication 1, **caractérisé en ce que** le réservoir (2) est réalisé avec double paroi et isolé sous vide.

3. Engin spatial selon la revendication 2, **caractérisé en ce que**, dans la région sous vide, le réservoir (2) est protégé, en supplément, par une feuille isolante à plusieurs couches.

4. Engin spatial selon l'une des revendications 1 à 3, **caractérisé en ce que** le réservoir (2) est protégé vers l'extérieur par une mousse isolante (9).

5. Engin spatial selon l'une des revendications 1 à 4, **caractérisé en ce que**, dans le réservoir (2), est prévue une tôle en forme de L (6), dans l'angle de
laquelle est disposé une tôle (11) découpée à la manière d'une section de cylindre.

6. Engin spatial selon la revendication 5, **caractérisé en ce que** les tôle (6, 11) sont pourvues de trous.

7. Engin spatial selon revendications 5 ou 6, **caractérisé en ce qu'**un tamis (3) cylindrique et plissé est fixé à la tôle en forme de L (6), au moyen de plaques finales, à droite et à gauche, ainsi que supplémentairement dans la région d'un tube de sortie (4).

8. Engin spatial selon la revendication 5 **caractérisé en ce que** plusieurs tôles (5) coniques sont installées sur la tôle en forme de L (6), sachant que celles-ci ne présentent aucun contact avec la paroi du réservoir (1).

9. Engin spatial selon la revendication 6, **caractérisé en ce que** des points de maintien (14) sont prévus pour la fixation des tôles (6, 11) à distance maximale du tamis (3) servant de point de prélèvement.

10. Engin spatial selon la revendication 1, **caractérisé en ce que** le tube de sortie (4) est conçu, dans sa zone s'étendant à l'intérieur du réservoir (2), en tant que heat pipe et est pourvu de rainures longitudinales sur sa surface extérieure.
